# EUROPÄISCHE PATENTANMELDUNG

(11) **EP 1 738 864 A2**
(43) Veröffentlichungstag der Anmeldung: **03.01.2007**
(21) Anmeldenummer: 06011565.6
(22) Anmeldetag: 03.06.2006
(51) Int. Cl.: B23Q 1/00, B23B 31/26

(54) **Spannvorrichtung**

(30) Priorität: 01.07.2005 DE 102005030820
(71) Anmelder: OTT-JAKOB GmbH & Co. Spanntechnik KG, 87663 Lengenwang (DE)
(72) Erfinder: Bechteler, Wolfgang, 87640 Biessenhofen (DE); Greif, Josef, 87654 Friesenried (DE)
(74) Vertreter: Schwarz, Thomas

(57) **Zusammenfassung**

Die Erfindung betrifft eine Spannvorrichtung zur lösbaren Verbindung zweier Maschinenteile (1, 4), mit einem an oder in dem ersten Maschinenteil (1) angeordneten Spannaggregat (2) und einem mit diesem zusammenwirkenden Gegenstück (3) an oder in dem zweiten Maschinenteil (4), wobei das Spannaggregat (2) ein axial verschiebbares Spannelement (6) und mehrere dem Spannelement (6) zugeordnete und durch dessen Axialverschiebung radial bewegbare Zangenelemente (7) mit einer Spannfläche (19) zur Anlage an einer entsprechenden Gegenfläche (20) des Gegenstücks (3) enthält. Um eine nachträgliche Ausrichtung oder Justierung des gespannten Maschinenteils zu ermöglichen, enthält das Gegenstück (3) einen Außenteil (49), einen im Außenteil (49) angeordneten Zwischenteil (50) und einen im Zwischenteil (50) angeordneten Innenteil (7), die durch flexible äußere und innere Stege (52, 53) miteinander verbunden und ansonsten durch zum äußere und innere Spalte (54, 55) voneinander getrennt sind, wobei der Zwischenteil (50) und der den Zangenelementen (7) zugeordnete Innenteil (51) relativ zum Außenteil (49) durch Stellelemente (63) in unterschiedliche Richtungen verstellbar sind.

## Beschreibung

Die Erfindung betrifft eine Spannvorrichtung zur lösbaren Verbindung zweier Maschinenteile, insbesondere zum Spannen eines Bearbeitungsmoduls an einem Teil einer Bearbeitungsmaschine, nach dem Oberbegriff des Anspruchs 1.

Eine derartige Spannvorrichtung ist aus der DE 197 03 354 C1 bekannt. Dort ist in einem ersten Maschinenteil ein in Richtung einer Zentralachse axial verschiebbares Spannelement mit mehreren an dessen Außenseite anliegenden und durch eine Axialverschiebung des Spannelements radial bewegbaren Zangenelementen zum Eingriff in einen an einem zweiten Maschinenteil angeordneten Spannring vorgesehen. Die radial beweglichen Zangenelemente weisen eine äußere konische Spannfläche zur Anlage an einer entsprechenden Gegenfläche im Inneren des Spannrings auf. Bei dieser bekannten Spannvorrichtung ist der Spannring innerhalb eines an dem zweiten Maschinenteil befestigten äußeren Halterings quer zur Bewegungsrichtung des Spannelements verschiebbar angeordnet. Durch diese "schwimmende" Lagerung des mit den Zangenelementen zusammenwirkenden Spannrings kann ein Fluchtungsfehler, d.h. ein seitlicher Versatz zwischen der Mittelachse des Spannelements und der Achse des Spannrings ausgeglichen werden. Im gespannten Zustand wird das zu spannende zweite Maschinenteil jedoch an das erste Maschinenteil angepresst, so dass eine nachträgliche Justierung des gespannten zweiten Maschinenteils nicht mehr möglich ist.

Aus der DE 2 057 900 A ist ein aus drei im wesentlichen konzentrischen Ringelementen bestehender Drehfutterflansch bekannt, bei dem zwischen einem Flansch und dem Futter ein Haltering und ein radial verschiebbarer Zentrierring vorgesehen ist, mit dem das Futter kraftschlüssig verbunden ist. Der Zentrierring ist durch radial angreifende Zentrierschrauben verstellbar und ermöglich so eine Justierung und Zentrierung des Futters.

Aufgabe der Erfindung ist es, eine Spannvorrichtung der eingangs genannten Art zu schaffen, die eine nachträgliche Ausrichtung oder Justierung des gespannten Maschinenteils ermöglicht.

Diese Aufgabe wird durch eine Vorrichtung mit den Merkmalen des Anspruchs 1 gelöst. Zweckmäßige Ausgestaltungen und vorteilhafte Weiterbildungen der Erfindung sind Gegenstand der Unteransprüche.

Bei der erfindungsgemäßen Spannvorrichtung kann das zu spannende Maschinenteil durch die spezielle Ausgestaltung des mit dem Spannaggregat zusammenwirkenden Gegenstücks auch im gespannten Zustand relativ einfach nachgestellt und justiert werden. Durch Verstellung der vorzugsweise als Stellschrauben ausgeführten Stellelemente kann z.B. der mit dem zu spannenden Maschinenteils fest verbundene Außenteil des Gegenstücks gegenüber dem mit dem Spannaggregat zusammenwirkenden Innenteil in unterschiedliche Richtungen verstellt und somit eine nachträgliche Einstellung bzw. Justierung des zu spannenden Maschinenteils erreicht werden. Da die Verstellung des Außenteils über ein Zwischenteil erfolgt und die Verbindungen zwischen dem Außen und dem Zwischenteil sowie zwischen dem Innenteil und dem Zwischenteil in einer Richtung flexibel und in einer dazu senkrechten Richtung starr sind, wird trotz der Verstellmöglichkeiten eine relativ hohe Gesamtsteifigkeit der Spannvorrichtung erreicht.

In einer besonders zweckmäßigen Ausführung ist das Außenteil mit dem Zwischenteil über diametral gegenüberliegende äußere Stege verbunden. Das Zwischenteil ist mit dem Innenteil über ebenfalls diametral gegenüberliegende Stege verbunden, wobei die äußeren Stege gegenüber den inneren Stegen in Umfangsrichtung des Gegenstücks um 90° zueinander versetzt sind. Der Außenteil kann so gegenüber dem Zwischenteil in einer Richtung verstellt werden, während es in einer dazu senkrechten Richtung starr mit dem Zwischenteil verbunden ist. Der Zwischenteil kann gegenüber dem Innenteil in einer zur Verstellrichtung des Außenteils senkrechten Richtung verstellt werden, während er in der Verstellrichtung des Außenteils starr mit dem Innenteil verbunden ist. Dadurch wird eine einfache Verstellmöglichkeit in zwei zueinander senkrechten Achsen erreicht.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Schnittansicht einer erfindungsgemäßen Spannvorrichtung in einer Spannstellung;

- Figur 2: eine Schnittansicht der Spannvorrichtung von Figur 1 in einer Lösestellung;
- **Figur 3**: ein Gegenstück der in den Figuren 1 und 2 gezeigten Spannvorrichtung in einem Querschnitt entlang der Linie I-I von Figur 1;
- Figur 4: das Gegenstück von Figur 3 in einer Draufsicht und
- Figur 5: ein zweites Ausführungsbeispiel einer Spannvorrichtung in einer Schnittansicht.

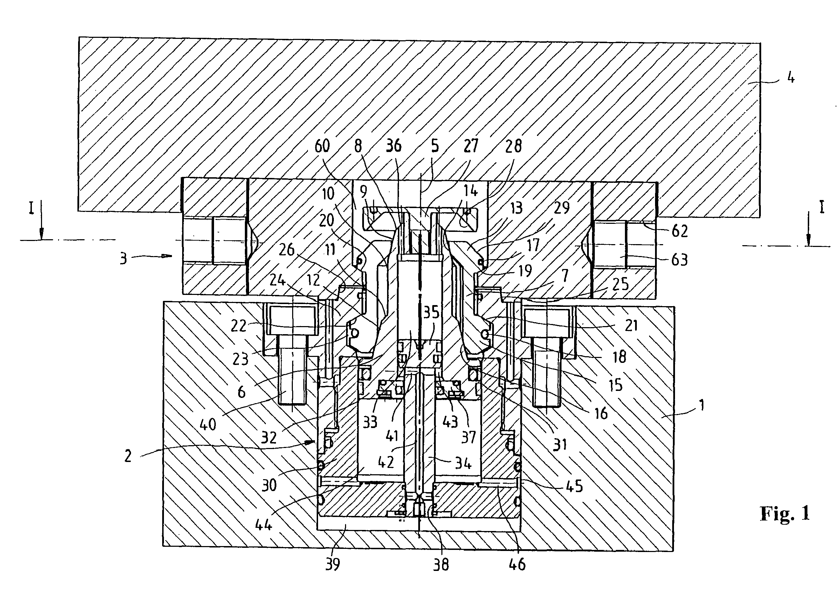

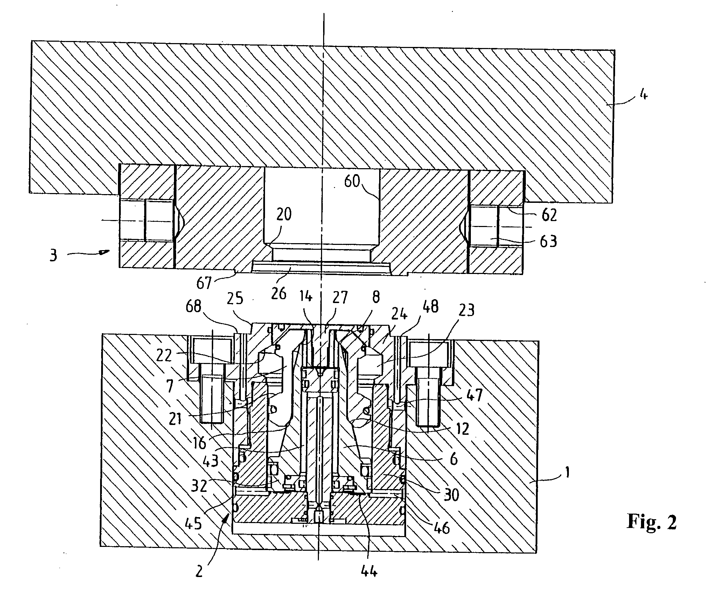

Die in den Figuren 1 und 2 in einer Spann- und Lösestellung im Schnitt dargestellte Spannvorrichtung enthält ein innerhalb eines ersten Maschinenteils 1 angeordnetes Spannaggregat 2 und ein mit diesem zusammenwirkendes Gegenstück 3, das an oder in einem zu spannenden zweiten Maschinenteil 4 angeordnet ist. Das erste Maschinenteil 1 kann z.B. ein Arbeitstisch einer Bearbeitungsmaschine, ein separates Gehäuse oder ein anderes geeignetes Maschinenteil sein. Das zweite Maschinenteil 4 kann ein Bearbeitungsmodul, ein Aufspanntisch oder einem anderes zu spannendes Maschinenteil sein.

Das Spannaggregat 2 enthält ein innerhalb des ersten Maschinenteils 1 in Richtung einer Mittelachse 5 axial verschiebbar angeordnetes Spannelement 6 und mehrere Zangenelemente 7, die an der Außenseite des Spannelements 6 in dessen Umfangsrichtung beabstandet angeordnet und durch axiale Verschiebung des Spannelements 6 radial und parallel zur Mittelachse 5 bewegbar sind. Hierzu weist das Spannelement 6 an seinem in Figur 1 oberen freien Ende einen schlankeren Bereich mit einer ersten konischen Anlagefläche 8 und einer zweiten konischen Anlagefläche 9, einen daran anschließenden zylindrischen Bereich 10 und einen darauf folgenden verbreiterten Bereich mit einer dritten konischen Anlagefläche 11 und einer vierten konischen Anlagefläche 12 auf.

Die Zangenelemente 7 haben ein in der Spannstellung in das Gegenstück 3 eingreifendes oberes Ende 13 mit einer ersten Innenfläche 14 zur Auflage an den konischen Anlageflächen 8 oder 9 des Spannelements 6 und ein gegenüber liegendes unteres Ende 15 mit einer zweiten Innenfläche 16 zur Auflage an den konischen Anlageflächen 11 oder 12 des Spannelements 6.

Durch zwei sie umspannende Ringfedern 17 und 18 werden die Zangenelemente 7 nach innen an das Spannelement 6 angedrückt. An der Außenseite der in das Gegenstück 3 eingreifenden oberen Enden 13 der Zangenelemente 7 ist eine erste Spannfläche 19 vorgesehen, die bei der in Figur 1 gezeigten Spannstellung zur Anlage an einer konischen Gegenfläche 20 im Inneren des Gegenstücks 3 gelangt. An den unteren Enden 15 der Zangenelemente 7 ist eine zweite Spannfläche 21 vorgesehen, die in der Spannstellung von Figur 1 zur Anlage an einer konischen Gegenfläche 22 einer Ringnut 23 an der Innenseite einer Einsatzbuchse 24 kommt. Die beiden Spannflächen 19 und 21 an der Außenseite der Zangenelemente 7 sowie die entsprechenden Gegenflächen 20 und 22 sind in Bezug auf die Mittelachse 5 entgegengesetzt zueinander geneigt. Die Einsatzbuchse 24 weist an ihrer oberen Stirnseite einen konischen Zentrieransatz 25 zum Eingriff in eine entsprechende Zentrieröffnung 26 an der Unterseite des Gegenstücks 3 auf.

Auf dem oberen Ende des Spannelements 6 ist eine Mitnehmerscheibe 27 befestigt, die beim Einfahren des Spannelements 6 mit den oberen Enden 13 der Zangenelemente 7 zusammenwirkt. Die Mitnehmerscheibe 27 enthält hierzu an ihrer Unterseite eine Innenkonusfläche 28, die beim Einfahren des Spannelements 6 mit konischen äußeren Flächenabschnitten 29 an den oberen Enden 13 der Zangenelemente 7 in Eingriff gelangt.

Bei dem hier gezeigten Ausführungsbeispiel ist das Spannelement 6 in Art eines Druckstempels ausgeführt, der an seinem in Figur 1 unten angeordneten inneren Ende einen innerhalb eines Zylinders 30 verschiebbar geführten und durch eine Dichtung 31 gegenüber dem Zylinder 30 radial abgedichteten Druckkolben 32 aufweist. In einer Bohrung 33 im Inneren des Spannelements 6 ist ferner ein über eine Kolbenstange 34 am Boden des Zylinders 30 abgestützter innerer Kolben 35 radial abgedichtet geführt. In dem oberen Ende des Spannelements 6 sind mit der Bohrung 33 in Verbindung stehende Entlüftungsöffnungen 36 vorgesehen. Die Kolbenstange 34 ragt radial abgedichtet durch einen am inneren Ende des Spannelements 6 angeordneten Führungsring 37 und ist mit ihrem dem Kolben 35 entgegen gesetzten unteren Ende in einer entsprechenden Bohrung 38 im Boden des Zylinders 30 befestigt. Der Zylinder 30 ist mit der Einsatzbuchse 24 verschraubt und zusammen mit dieser in eine Öffnung 39 des ersten Maschinenteils 1 eingesetzt. Über mehrere Schrauben 40 ist die mit einem Ringflansch versehene Einsatzbuchse 24 zusammen mit dem Zylinder 30 in der Öffnung 39 fixiert.

Zwischen der dem Führungsring 37 zugewandten inneren Ringfläche des inneren Kolbens 35 und dem Führungsring 37 wird ein erster Druckraum 43 begrenzt, der über einen durch die Kolbenstange 34 verlaufenden zentralen Versorgungskanal 42 und radiale Öffnungen 41 mit einem Druckfluid, vorzugsweise Hydraulikfluid, beaufschlagt werden kann. Zwischen der inneren Stirnfläche des Druckkolbens 32 und dem Boden des Zylinders 30 wird ein zweiter Druckraum 44 begrenzt, der über einen Ringkanal 45 und radiale Öffnungen 46 mit Druckfluid beaufschlagbar ist. Wie besonders aus Figur 2 hervorgeht, ist in der Einsatzbuchse 24 ebenfalls ein Ringkanal 47 mit mehreren nach oben offenen Blasluftbohrungen 48 vorgesehen. Über den Ringkanal 47 und die Blasluftbohrungen 48 kann Druckluft zur Reinigung der Auflageflächen an der Einsatzbuchse 24 und dem Gegenstück 3 zugeführt werden.

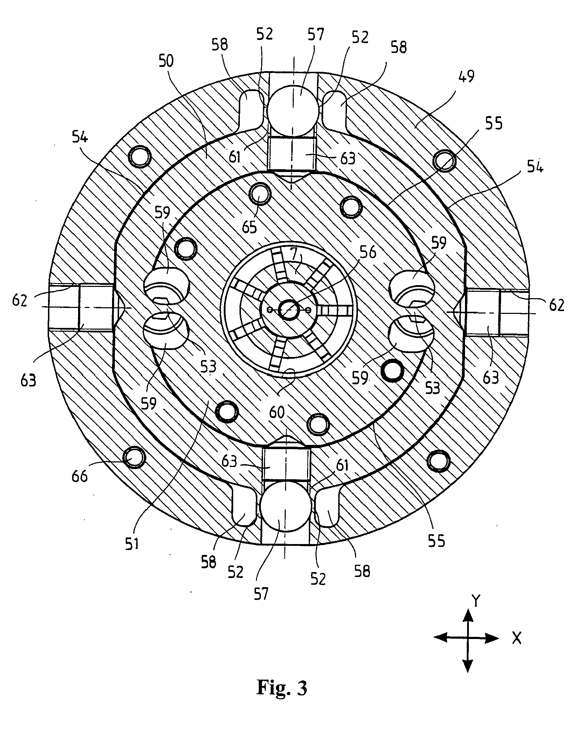

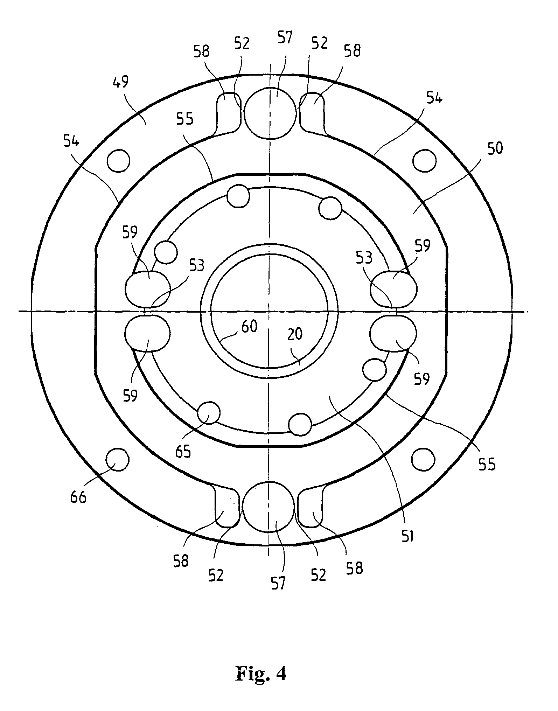

Das mit dem Spannaggregat 2 zusammenwirkende Gegenstück 3 ist in den Figuren 3 und 4 gezeigt. Wie besonders aus dem Querschnitt von Figur 3 hervorgeht, enthält das aus einem Teil gefertigte Gegenstück 3 einen bei der gezeigten Ausführung im wesentlichen ringförmigen Außenteil 49, einen im Außenteil 49 angeordneten Zwischenteil 50 und einen im Zwischenteil 50 angeordneten Innenteil 51, die nur durch dünne flexible äußere und innere Stege 52 bzw. 53 miteinander verbunden und ansonsten durch halbringförmig verlaufende äußere und innere schmale Spalte 54 und 55 voneinander getrennt sind. Bei der gezeigten Ausführung ist der im wesentlichen ringförmige Außenteil 49 mit dem ebenfalls ringförmigen Zwischenteil 50 an zwei diametral gegenüberliegenden Seiten über jeweils zwei parallele äußere Stege 52 verbunden. Die äußeren Stege 52 sind zwischen zwei parallel zu einer Mittelachse 56 des Außenteils 49 verlaufenden und diametral gegenüberliegenden Durchgangsöffnungen 57 und zwei daneben angeordneten seitlichen Durchbrüchen 58 angeordnet. Die Durchbrüche 58 befinden sich jeweils an den Enden der beiden im Wesentlichen halbkreisförmig verlaufenden äußeren Spalte 54.

Der Innenteil 51 ist ebenfalls ringförmig ausgebildet und über zwei an diametral gegenüberliegenden Seiten vorgesehene innere Stege 53 mit dem Zwischenteil 50 verbunden. Die beiden inneren Stege 53 sind gegenüber den äußeren Stegen 52 in Umfangsrichtung des Gegenstücks 3 um 90° versetzt und befinden sich zwischen jeweils zwei voneinander beabstandeten ovalen Durchbrüchen 59, die an der Außenseite des Innenteils 51 an den Enden der beiden halbringförmigen inneren Spalte 54 diametral gegenüberliegend vorgesehen sind. Sowohl die Durchbrüche 58 und 59 als auch die inneren und äußeren halbkreisförmigen Spalte 54 und 55 können in besonders zweckmäßiger Weise durch Drahterodieren hergestellt werden. In eine zentrale Durchgangsöffnung 60 des Innenteils 51 greifen die Zangenelemente 7 des Spannaggregats 2 ein.

In dem Gegenstück 3 sind vier in Umfangsrichtung um jeweils 90° zueinander versetzte radiale Gewindebohrungen 61 und 62 angeordnet, wobei zwei diametral gegenüberliegende Bohrungen 61 quer durch die Durchgangsöffnungen 57 bis zum Innenteil 51 und die beiden anderen Bohrungen 62 bis zum Zwischenteil 50 verlaufen. In den Gewindebohrungen 61 und 62 sind als Stellschrauben ausgeführte Stellelemente 63 angeordnet. Die Stellelemente 63 greifen mit ihren inneren Enden in entsprechende Vertiefungen 64 an den Außenseiten des Innen- bzw. Außenteils ein. In dem Außenteil 49 und dem Innenteil 51 des Gegenstücks 3 sind mehrere in Richtung der Mittelachse 56 verlaufende Durchgangsbohrungen 65 und 66 für Halteschrauben zur festen Verbindung des Außenteils 49 und des Innenteils 51 mit dem Maschinenteil 4 vorgesehen.

Die Funktionsweise der vorstehend beschriebenen Spannvorrichtung wird im Folgenden anhand der Figuren 1 bis 3 erläutert.

Bei der in Figur 2 gezeigten Löse- oder Wechselstellung befindet sich das Spannelement 6 in einer vollständig eingefahrenen Position, wobei die Oberseite der in das Spannelement 6 eingeschraubten Mitnehmerscheibe 27 mit der Oberseite des konischen Zentrieransatzes 25 bündig und abgedichtet abschließt. Die Zangenelemente 7 sind in ihrer radial innersten Stellung angeordnet und liegen mit ihren Innenflächen 14 und 16 an den konischen Anlageflächen 8 und 12 des Spannelements an. In der gezeigten Löse- oder Wechselstellung kann das zu spannende zweite Maschinenteil 4 mit dem Gegenstück 3 derart auf die im Maschinenteil 1 befestigte Einsatzbuchse 24 aufgesetzt werden, dass der Zentrieransatz 25 der in dem Maschinenteil 1 befestigten Einsatzbuchse 24 in die Zentrieröffnung 26 an der Unterseite des Gegenstücks 3 eingreift und ein nach unten vorstehenden Ringabsatz 67 des Gegenstücks 3 zur Auflage auf an einer ringförmigen Auflagefläche 68 der Einsatzbuchse 24 kommt.

Zum Spannen des Maschinenteils 4 wird dann in den Druckraum 44 ein Druckfluid über den Ringkanal 45 und die radialen Öffnungen 46 zugeführt. Dadurch wird der Druckkolben 32 von unten beaufschlagt und damit das Spannelement 6 nach oben aus der Einsatzbuchse 24 ausgefahren. Die Zangenelemente 7 werden durch die beiden Ringfedern 17 und 18 zunächst noch in der in Figur 2 gezeigten inneren radialen Position gehalten und zusammen mit dem Spannelement 6 nach oben verschoben, bis die zweiten Spannflächen 21 der Zangenelemente 7 zur Anlage an der dazugehörigen Gegenfläche 22 innerhalb der Ringnut 23 der Einsatzbuchse 24 gelangen. Dadurch wird die weitere Auswärtsbewegung der Zangenelemente 7 gestoppt. Bei der weiteren Auswärtsbewegung des Spannelements 6 werden die Zangenelemente 7 dann zunächst durch die konischen Anlageflächen 8 und 11 des Spannelements 6 relativ schnell und anschließend durch die konischen Anlageflächen 9 und 12 mit hohem Druck radial nach außen verschoben. Infolge der Anlage der Spannflächen 21 an der Gegenfläche 22 und deren Neigung werden die Zangenelemente 7 dabei wieder in die Einsatzbuchse 24 eingezogen, bis die ersten Spannflächen 19 der Zangenelemente 7 an der Gegenfläche 20 des Gegenstücks 3 anliegen und das Gegenstück 3 gegen die Einsatzbuchse gezogen wird.

Zum Lösen des Maschinenteils 4 wird das Druckfluid aus dem Druckraum abgelassen und stattdessen der Druckraum 43 mit Druckfluid beaufschlagt. Dadurch wird der innere Kolben 35 von unten beaufschlagt und das Spannelement 6 eingefahren. Beim Einfahren des Spannelements 6 werden die Zangenelemente 7 von der Mitnehmerscheibe 27 nach unten mitgenommen. Hierbei kommt die Mitnehmerscheibe 27 mit ihrer Innenkonusfläche 28 mit den konischen Flächenabschnitten 29 der Zangenelemente 7 in Berührung, wodurch diese aus ihrer Spannstellung gelöst und radial nach innen bewegt werden. Die radiale Einwärtsbewegung wird durch die Ringfedern 17 und 18 unterstützt. Sobald die Zangenelemente 7 an dem zylindrischen Bereich 10 des Spannelements 6 anliegen, werden sie in die Einsatzbuchse 24 eingezogen und nehmen wieder die in Figur 2 gezeigte Löse- oder Wechselstellung ein.

Bei der vorstehend beschriebenen Spannvorrichtung kann bei Bedarf auch in der Spannstellung noch eine Nachstellung oder Justierung des zu spannenden Maschinenteils 4 erfolgen. Hierzu werden die in den Durchgangsbohrungen 65 des Innenteils 51 angeordneten Halteschrauben vor dem Spannvorgang gelockert, so dass das Maschinenteil 4 bezüglich des Innenteils 51 im Rahmen der Spalte seitlich verschoben werden kann. Durch Verstellung der in den Gewindebohrungen 61 angeordneten Stellschrauben 63 kann der Zwischenteil 50 aufgrund der flexiblen Stege 53 im Rahmen des durch die Spalte 55 vorgegeben Spiels gegenüber dem Innenteil 51 in einer Richtung (Y-Richtung in Figur 3) verschoben werden, während er in der dazu senkrechten Richtung (X-Richtung in Figur 3) starr mit dem Innenring verbunden ist. Durch Verstellung der in den Gewindebohrungen 62 angeordneten Stellschrauben 63 kann dagegen der Außenteil 49 infolge der flexiblen Stege 52 im Rahmen des durch die Spalte 54 vorgegeben Spiels gegenüber dem Zwischenteil 50 in einer zur Verstellrichtung des Zwischenteils 50 senkrechten Richtung (X-Richtung in Figur 3) verschoben werden, während er in der dazu senkrechten Richtung (Y-Richtung in Figur 3) starr mit dem Zwischenteil 50 verbunden ist. Auf diese Weise kann eine nachträgliche Justierung des Maschinenteils 4 in zwei Achsrichtungen (X- und Y-Achse) erfolgen. Wenn das Maschinenteil 4 ausgerichtet ist, können die in den Durchgangsbohrungen 65 befindlichen Halteschrauben angezogen werden, so dass die gewünschte Stellung des Maschinenteils 1 beibehalten wird. Eine zusätzliche Höhenjustierung kann dadurch erreicht werden, dass die Einsatzbuchse 24 höhenverstellbar in dem ersten Maschinenteil 1 angeordnet ist.

Die Erfindung ist nicht auf das vorstehend beschriebene Ausführungsbeispiel beschränkt. So kann das Spannelement anstelle eines hydraulischen Antriebs auch durch einen elektrischen, pneumatischen oder einen sonstigen geeigneten Antrieb bewegt werden.

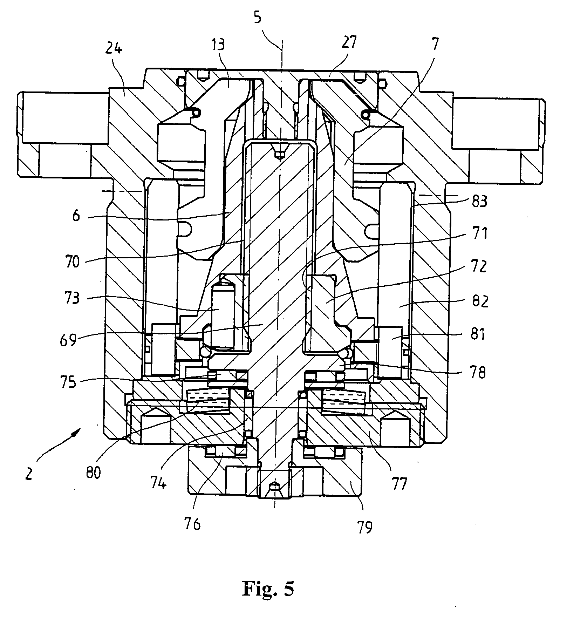

In Figur 5 ist ein weiteres Ausführungsbeispiel eines Spannaggregats zur manuellen oder elektrischen Betätigung gezeigt. Die dem vorstehend beschriebenen Ausführungsbeispiel entsprechenden Bauteile sind mit denselben Bezugszeichen versehen. Auch bei dieser Ausführung weist das innerhalb eines ersten Maschinenteils angeordnete Spannaggregat 2 ein innerhalb einer Einsatzbuchse 24 axial verschiebbares Spannelement 6 und mehrere Zangenelemente 7 auf, die an der Außenseite des Spannelements 6 in dessen Umfangsrichtung beabstandet angeordnet und durch axiale Verschiebung des Spannelements 6 radial und parallel zur Mittelachse 5 bewegbar sind. Auf dem oberen Ende des Spannelements 6 ist ebenfalls eine Mitnehmerscheibe 27 befestigt, die beim Einfahren des Spannelements 6 mit den oberen Enden 13 der Zangenelemente wie bei der ersten Ausführungsform zusammenwirkt. Durch die Mitnehmerscheibe wird das Spannaggregat 2 im eingefahrenen Zustand dicht verschlossen.

Die axiale Verschiebung des Spannelements 6 erfolgt hier über eine Gewindespindel 69, die mit einem oberen Gewindezapfen 70 in ein entsprechendes Innengewinde 71 einer mit dem Spannelement 6 verbundenen Spindelmutter 72 eingreift. Die Spindelmutter 72 ist in dem Spannelement 6 über ein Radiallager 73 drehbar und in Axialrichtung gesichert angeordnet. Die Gewindespindel 69 ist über ein Radiallager 74 sowie obere und untere Axiallager 75 bzw. 76 an einem in die Einsatzbuchse 24 eingeschraubten Lagerdeckel 77 drehbar gelagert und über einem Ringbund 78 sowie eine am unteren Ende der Gewindespindel 69 aufgeschraubte Scheibe 79 in Axialrichtung gesichert. Die Scheibe 79 ist über ein formschlüssige WellenNaben-Verbindung mit der Gewindespindel 69 verbunden. Nach oben wird die Gewindespindel 69 durch Tellerfedern 80 vorgespannt. Zur Verdrehsicherung des Spanelements 6 sind an dessen Außenseite radial vorstehende Zapfen 81 befestigt, die in entsprechende Längsnuten 82 einer in der Einsatzbuchse 24 angeordneten Hülse 83 eingreifen.

Durch Drehung der Gewindespindel 69 kann so das Spannelement 6 über die Spindelmutter 72 verschoben und somit die Spannvorrichtung betätigt werden. Die Drehung der Gewindespindel kann entweder manuell oder über einen Motor erfolgen.

## Patentansprüche

1. Spannvorrichtung zur lösbaren Verbindung zweier Maschinenteile (1, 4), insbesondere zum Spannen eines Bearbeitungsmoduls an einem Arbeitstisch oder einem Maschinengestell einer Bearbeitungsmaschine, mit einem an oder in dem ersten Maschinenteil (1) angeordneten Spannaggregat (2) und einem mit diesem zusammenwirkenden Gegenstück (3) an oder in dem zweiten Maschinenteil (4), wobei das Spannaggregat (2) ein axial verschiebbares Spannelement (6) und mehrere dem Spannelement (6) zugeordnete und durch dessen Axialverschiebung radial bewegbare Zangenelemente (7) mit einer Spannfläche (19) zur Anlage an einer entsprechenden Gegenfläche (20) des Gegenstücks (3) enthält, **dadurch gekennzeichnet, dass** das Gegenstück (3) einen Außenteil (49), einen im Außenteil (49) angeordneten Zwischenteil (50) und einen im Zwischenteil (50) angeordneten Innenteil (51) enthält, die durch flexible äußere und innere Stege (52, 53) miteinander verbunden und ansonsten durch äußere und innere Spalte (54, 55) voneinander getrennt sind, wobei der Zwischenteil (50) und der den Zangenelementen (7) zugeordnete Innenteil (51) relativ zum Außenteil (49) durch Stellelemente (63) in unterschiedliche Richtungen verstellbar sind.

2. Spannvorrichtung nach Anspruch 1, **dadurch gekennzeichnet, dass** der Außenteil (49) mit dem Zwischenteil (50) an diametral gegenüberliegenden Seiten durch jeweils zwei parallele äußere Stege (52) verbunden ist.

3. Spannvorrichtung nach Anspruch 2 **dadurch gekennzeichnet, dass** die beiden parallelen äußeren Stege (52) zwischen zwei parallel zu einer Mittelache (56) des Außenteils (56) des Außenteils (49) verlaufenden, diametral gegenüberliegenden Durchgangsöffnungen (57) und zwei daneben angeordneten Durchbrüchen (58) angeordnet sind.

4. Spannvorrichtung nach Anspruch 3, **dadurch gekennzeichnet, dass** die Durchbrüche (58) am Ende der beiden halbkreisförmig verlaufenden äußeren Spalte (54) angeordnet sind.

5. Spannvorrichtung nach einem der Ansprüche 1 bis 4, **dadurch gekennzeichnet, dass** der Innenteil (51) über zwei an diametral gegenüberliegenden Seiten vorgesehene innere Stege (53) mit dem Zwischenteil (50) verbunden ist.

6. Spannvorrichtung nach Anspruch 5, **dadurch gekennzeichnet, dass** die inneren Stege (53) jeweils zwischen zwei voneinander beabstandeten ovalen Durchbrüchen (59) an gegenüberliegenden Seiten des Innenteils (51) angeordnet sind.

7. Spannvorrichtung nach Anspruch 6, **dadurch gekennzeichnet, dass** die ovalen Durchbrüche (59) an den Enden der halbringförmig verlaufenden inneren Spalte (54) angeordnet sind.

8. Spannvorrichtung nach einem der Ansprüche 1 bis 7, **dadurch gekennzeichnet, dass** die äußeren und inneren Stege (52, 53) in Umfangsrichtung des Gegenstücks (3) um 90° zueinander versetzt sind.

9. Spannvorrichtung nach einem der Ansprüche 1 bis 8, **dadurch gekennzeichnet, dass** das Spannelement (6) in Art eines Druckstempels mit einem innerhalb eines Zylinders (30) verschiebbar geführten Druckkolben (32) ausgeführt ist.

10. Spannvorrichtung nach Anspruch 9, **dadurch gekennzeichnet, dass** in einer Bohrung (33) im Inneren des Spannelements (6) ein über eine Kolbenstange (34) am Boden des Zylinders (30) abgestützter innerer Kolben (35) axial verschiebbar angeordnet ist.

11. Spannvorrichtung nach Anspruch 10, **dadurch gekennzeichnet, dass** die Kolbenstange (34) radial abgedichtet durch einen am inneren Ende des Spannelements (6) angeordneten Führungsring (37) ragt und mit ihrem dem inneren Kolben (35) entgegen gesetzten Ende in einer entsprechenden Bohrung (38) im Boden des Zylinders (30) befestigt ist.

12. Spannvorrichtung nach Anspruch 11, **dadurch gekennzeichnet, dass** zwischen einer dem Führungsring (37) zugewandten inneren Ringfläche des inneren Kolbens (35) und dem Führungsring (37) ein erster Druckraum (43) begrenzt wird, der über einen durch die Kolbenstange (34) verlaufenden Versorgungskanal (42) und radiale Öffnungen (41) mit Druckfluid beaufschlagbar ist.

13. Spannvorrichtung nach einem der Ansprüche 9 bis 12, **dadurch gekennzeichnet, dass** zwischen der inneren Stirnfläche des Druckkolbens (32) und dem Boden des Zylinders (30) ein zweiter Druckraum (44) begrenzt wird, der über einen Ringkanal (45) und radiale Öffnungen (46) mit Druckfluid beaufschlagbar ist.

14. Spannvorrichtung nach einem der Ansprüche 9 bis 13, **dadurch gekennzeichnet, dass** der Zylinder (30) mit einer Einsatzbuchse (24) verschraubt und zusammen mit dieser in eine Öffnung (39) des ersten Maschinenteils (1) eingesetzt ist.

15. Spannvorrichtung nach Anspruch 14, **dadurch gekennzeichnet, dass** in der Einsatzbuchse (14) ein Ringkanal (47) mit mehreren nach oben offenen Blasluftbohrungen (48) vorgesehen ist.

16. Spannvorrichtung nach einem der Ansprüche 1 bis 8, **dadurch gekennzeichnet, dass** das Spannelement (6) über eine Gewindespindel (69) und eine mit dem Spannelement (6) verbundene Spindelmutter (72) verschiebbar ist.

17. Spannvorrichtung nach Anspruch 16, **dadurch gekennzeichnet, dass** die Spindelmutter (72) in dem Spannelement (6) über ein Radiallager (73) drehbar gelagert und in Axialrichtung gesichert angeordnet ist.

18. Spannvorrichtung nach Anspruch 16 oder 17, **dadurch gekennzeichnet, dass** die Gewindespindel (69) über ein Radiallager (74) und Axiallager (75, 76) drehbar an einem Lagerdeckel (77) gelagert und über einen Ringbund (78) sowie eine an der Gewindespindel (69) befestigte Scheibe (79) in Axialrichtung gesichert ist.

19. Spannvorrichtung nach einem der Ansprüche 16 bis 18, **dadurch gekennzeichnet, dass** die Gewindespindel (69) durch Tellerfedern (80) axial vorgespannt ist.

20. Spannvorrichtung nach einem der Ansprüche 16 bis 19, **dadurch gekennzeichnet, dass** das Spannelement (6) durch radial vorstehende Zapfen (81), die in entsprechende Längsnuten (82) einer Hülse (83) eingreifen, gegen Verdrehen gesichert ist.
